# EUROPEAN PATENT APPLICATION

(11) **EP 2 910 756 A1**
(43) Date of publication of application: **26.08.2015**
(21) Application number: 14156242.1
(22) Date of filing: 21.02.2014
(51) Int. Cl.: F02D 41/00, F02D 13/02

(54) **Cylinder balanced operation of internal combustion engines**

(71) Applicant: Caterpillar Motoren GmbH & Co. KG, 24159 Kiel (DE)
(72) Inventor: Holst, Hauke, 24161 Altenholz (DE); Sixel, Eike Joachim, 24109 Kiel (DE)
(74) Representative: Kramer Barske Schmidtchen Patentanwälte PartG mbB

(57) **Abstract**

A method for balancing air filling values of a plurality of cylinders (9) of an internal combustion engine (100) having at least one air inlet valve (16) respectively associated with each cylinder of the plurality of cylinders (9) and a method for balancing fuel-air ratios is disclosed. The method comprise, for each cylinder of the plurality of cylinders (9), determining (step 610) a cylinder-specific air filling value associated with the respective cylinder of the plurality of cylinders (9); and, for at least one cylinder of the plurality of cylinders (9), modifying (step 620) the temporal opening (IVO, IVC) and/or valve lift of the respective at least one air inlet valve (16) to adapt the air filling values of the plurality of cylinders (9) to be matched over the plurality of cylinders (9). Matching further the fuel amounts provided over the plurality of cylinders (9), allows optimizing the engine for engine parameters such as NOx emission.

## Description

### Technical Field

The present disclosure generally relates to internal combustion engines. More particularly, the present disclosure relates to cylinder-specifically balancing combustion during operation of an internal combustion engine.

### Background

In particular for large internal combustion, every cylinder has its own parameter settings that may result in cylinder specific power output provided by each cylinder. Large internal combustion engines include Otto engines that can be operated, for example, at least partly on gaseous fuel such as gaseous fuel internal combustion engines or on liquid fuel such as Diesel or heavy oil engines. In addition, dual fuel (DF) internal combustion engines are configured for operation with liquid fuel, such as Diesel, as well gaseous fuel, such as natural gas. DF internal combustion engines may be, for example, spark ignited or ignited using a pilot injection of liquid fuel such as diesel.

For each cylinder, the provided power depends on the mixture of fuel and air that is combusted and usually provided by a charge air system and a fuel system as well as on the timing characteristics. Generally, the combustion of a mixture of fuel and air in a cylinder of an Otto engine is characterized by a so-called Lambda value describing an air-fuel ratio, i.e., the ratio of the amount of air in the cylinder to the amount of air required for stoichiometric combustion.

For example in large gaseous fuel combustion engines, Lambda is significantly greater than 1, for example, greater than 2. The Lambda value of the different cylinders of such a gaseous fuel combustion engine may differ, for example, depending on various characteristics of each cylinder such as its position within the V- or in-line configuration or its position within the firing order. Various control methods have been proposed to achieve a balanced operation of cylinders of an internal combustion engine such as a lambda balanced operation.

To control the charge air amount and timing, cam shaft technologies are disclosed, for example, in EP 2 136 054 Al for Diesel engines and in European patent application EP 13 150 421 filed by Caterpillar Motoren GmbH & Co. KG on 7 January 2013 for DF engines. Furthermore, a cam follower assembly, e.g. for adjustable fuel pump or valve timing configuration is disclosed in European patent application EP 13 167 689 filed by Caterpillar Motoren GmbH & Co. KG on 14 May 2013.

The present disclosure is directed, at least in part, to improving or overcoming one or more aspects of prior systems.

### Summary of the Disclosure

In a first aspect, a method for balancing air filling values of a plurality of cylinders of an internal combustion engine, which has at least one air inlet valve respectively associated with each cylinder of the plurality of cylinders, comprises, for each cylinder of the plurality of cylinders, determining a cylinder-specific air filling value associated with the respective cylinder of the plurality of cylinders, and, for at least one cylinder of the plurality of cylinders, modifying the temporal opening and/or valve lift of the respective at least one air inlet valve to adapt the air filling values of the plurality of cylinders to be matched over the plurality of cylinders.

In a further aspect, a method for balancing air-fuel ratios is based on the above summarized method for balancing air filling values of the plurality of cylinders, and further comprises setting fuel amounts cylinder-specifically to provide cylinder-specific power outputs to be matched over the plurality of cylinders.

In a further aspect, an internal combustion engine comprises a plurality of cylinders, for each cylinder of the plurality of cylinders, a fuel providing unit, an ignition timing device for controlling the ignition time of a fuel-air mixture in the respective cylinder, a pressure sensor for determining a cylinder-specific air filling value; and a control unit configured to perform at least one the above summarized methods.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic drawing of an exemplary internal combustion engine operable at least partly on gaseous fuel;
Fig. 2 shows a schematic cross-sectional view of a cylinder of a DF internal combustion engine;
Fig. 3 shows a schematic cross-sectional view of a cylinder of a gaseous fuel internal combustion;
Fig. 4 shows a schematic illustration of a flexible cam technology for controlling valve operation on a cylinder-specific basis;
Fig. 5 shows an exemplary time-pressure diagram of the cylinder pressure during the scavenging phase of an internal combustion engine; and
Fig. 6 shows a flow diagram of an exemplary method of balancing valve timings for individual cylinders.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as a limiting description of the scope of protection. Rather, the scope of protection shall be defined by the appended claims.

The present disclosure may be based in part on the realization that, using systems allowing cylinder-specific setting of valve timings, the determination of a charge air filling value as a control parameter may allow matching the air-fuel ratios of multiple cylinders. When matching air-fuel ratios, each cylinder should in principal receive the same or at least essentially the same, i.e. within a predetermined range, amounts of fuel and charge air. It was realized to match not only the cylinder-specifically provided power output but also to enforce similar exhaust parameters to the cylinders. Exhaust parameters such as NOx values are caused by the combustion process, which is dependent on the air-fuel ratio as well as the ignition timing. Thus, it was realized that, when operating multiple cylinders, e.g. with a common ignition timing, it may be possible to match the air amount by measuring a pressure for each of the combustion chambers and modifying the valve timings accordingly. The valve timings may need to be shifted by, for example, 5° to 10° to affect significant changes in the air filling amount. In addition, one may set matched power outputs of the cylinders before and/or after modification of the valve timings.

Then, returning to an engine based controlling, it was realized that exhaust parameters can be optimized, for example, by varying the ignition timing and/or the charge air pressure being set for all cylinders commonly. Accordingly, the exhaust parameters may be more uniform over the plurality of cylinders such that all cylinders may be operated together closer to an optimal operation point.

As will be described herein, the charge air amount, and therefore the air timing parameters, may be used as the parameter for evening out combustion processes over a plurality of cylinders.

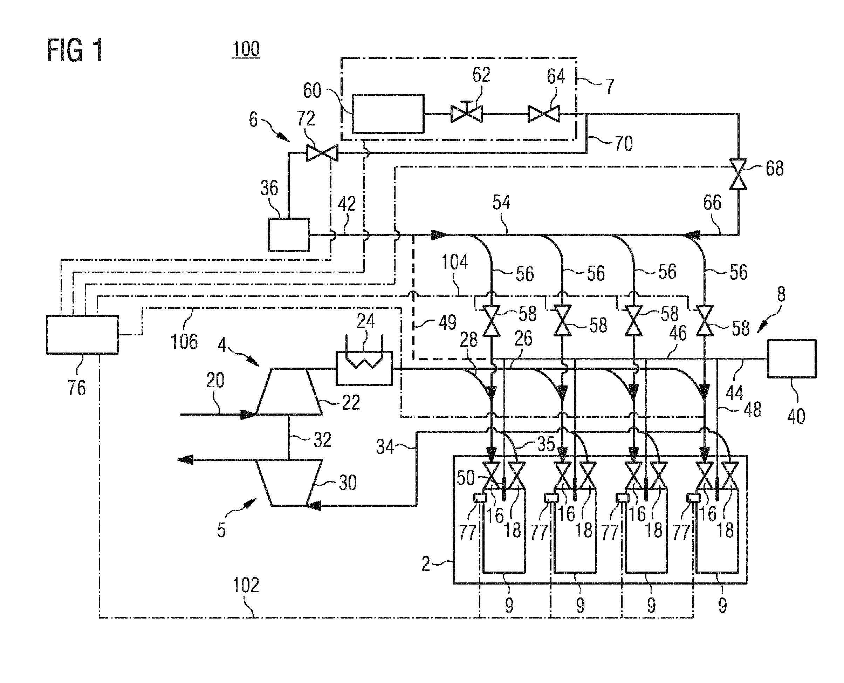

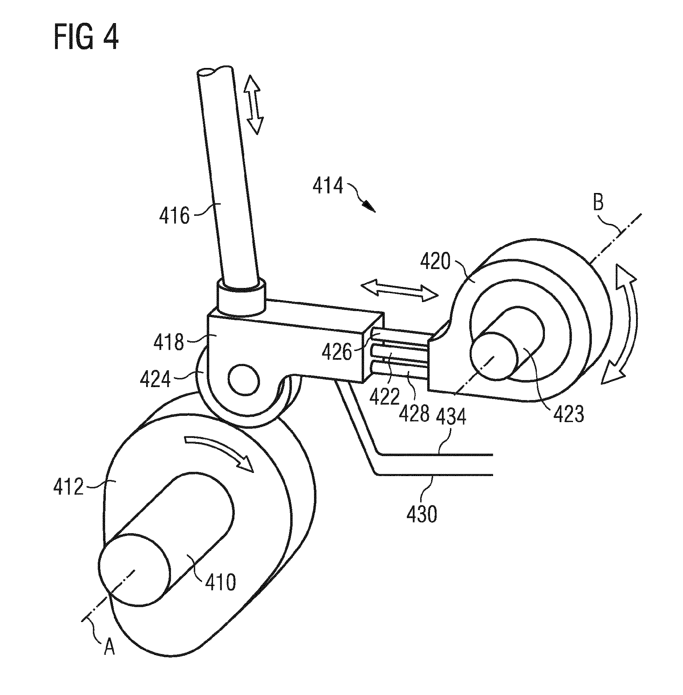

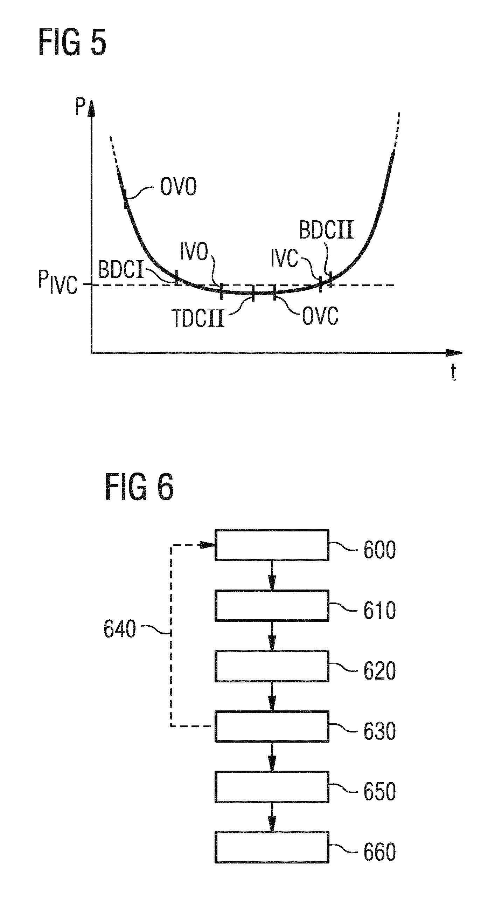

In the following, internal combustion engines operable at least partly on gaseous fuel are disclosed in Fig. 1 to 3. Fig. 4 illustrates schematically an exemplary approach for cylinder-specifically controlling valve timings. An exemplary method for controlling internal combustion engines using a charge air filling value is exemplarily described in connections with Figs. 5 and 6.

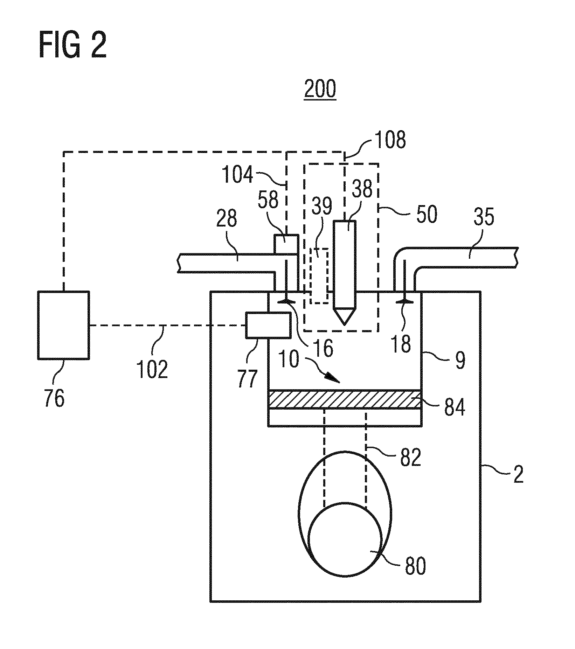

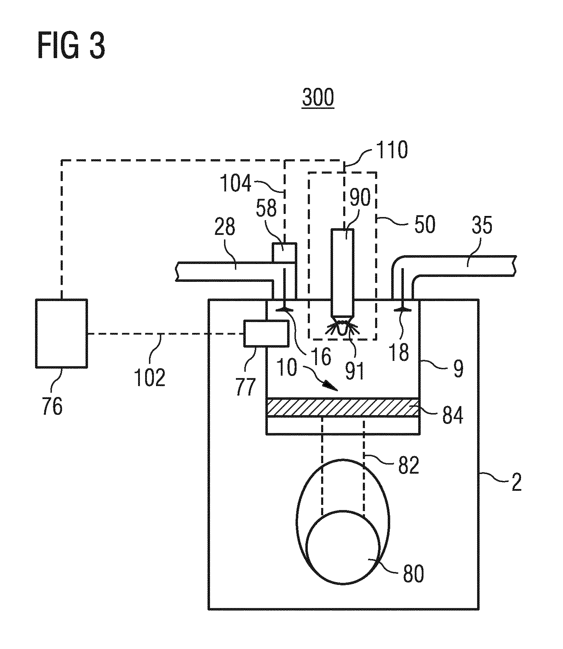

Although the herein disclosed considerations may also be applicable for internal combustions being operable on liquid fuel only, the illustration will be provided based on an exemplary internal combustion engine 100 operating at least partly on gaseous fuel as schematically illustrated in Fig. 1. It may be a DF engine as illustrated schematically in Fig. 2 or a gaseous fuel engine as illustrated schematically in Fig. 3.

Internal combustion engine 100 comprises an engine block 2, a charge air system 4, an exhaust gas system 5, a gaseous fuel system 6 including a purge gas system 7, and/or a liquid fuel system 8. Internal combustion engine 100 can be powered with a liquid fuel such as, for example, diesel fuel in a liquid fuel mode (LFM), and with a gaseous fuel such as natural gas provided, for example, by an LNG-system, in a gaseous fuel mode (GFM).

Engine block 2 comprises a plurality of cylinders. Exemplarily, four cylinders 9 are depicted in Fig. 1. Engine block 2 may be of any size, with any number of cylinders, such as 6, 8, 12, 16, or 20, and in any configuration, for example, "V," in-line or radial configuration.

Each cylinder 9 is equipped with at least one inlet valve 16 (e.g. two) and at least one outlet valve 18 (also e.g. two). Inlet valves 16 are fluidly connected to charge air system 4 and configured to provide charge air, or a mixture of charge air and gaseous fuel into cylinders 9. Analogous, outlet valves 18 are fluidly connected to exhaust gas system 5 and configured to direct exhaust gas out of respective cylinder 9.

Charge air is provided by charge air system 4 including an air intake 20, a compressor 22 to charge air, and a charge air cooler 24. A charge air manifold 26 is fluidly connected downstream of charge air cooler 24 and guides charge air via cylinder specific inlet channels 28 into respective cylinders 9.

Exhaust gas system 5 includes an exhaust gas turbine 30 connected to compressor 22 via shaft 32 and an exhaust gas manifold 34 guiding exhaust gas from individual exhaust gas outlet channels 35 to exhaust gas turbine 30.

Charge air system 4 may comprise one or more charge air manifolds 26. Similarly, exhaust gas system 5 may comprise one or more exhaust gas manifolds 34.

Exhaust gas turbine 30 and compressor 22 may be part of a single-stage or two-stage turbocharged system. The turbocharged system allows to modify the common pressure of the charge air provided to charge air manifold 26 within a pre-set range.

In addition, inlet valves 16 and outlet valves 18 may be installed within inlet channels 28 and outlet channels 35, respectively. Inlet channels 28 as well as outlet channels 35 may be provided within a common cylinder head or individual cylinder heads covering cylinders 9.

Operating inlet valves 16 and outlet valves 18 may be subject to cylinder-specific timings, i.e. opening time and closing time and, thus, opening duration during the oscillation of the piston. In dependence of those parameters, the amount of air provided into each cylinder for combustion, herein also characterized via a cylinder-specific air filling value, can be adjusted. This adjustment may be performed when tuning the internal combustion engine 100, for example, for a specific load range intended for the respective engine, e.g. highest efficiency at a maximum load for power generation applications or at part load for maritime applications. In addition or alternatively, the adjustment to match air amounts may be performed continuously or at specific intervals during operation of internal combustion engine 100. In the latter case, valve adjustments as illustrated in connection with Fig. 4 may be applied in real time.

Gaseous fuel system 6 comprises a gaseous fuel source 36 connected to gaseous fuel piping 42. Gaseous fuel source 36 constitutes a gaseous fuel feed for supplying gaseous fuel for combustion in GFM. For example, gaseous fuel source 36 comprises a gas valve unit and a gaseous fuel tank that contains natural gas in a pressurized state.

The gas valve unit may be configured to allow, to block, and to control flow from gaseous fuel tank into gaseous fuel piping 42. The gas valve unit may comprise gaseous fuel control valves, gaseous fuel shut-off valves and venting valves.

As shown in Fig. 1, gaseous fuel piping 42 is fluidly connected to a gaseous fuel manifold 54 which splits into a plurality of gaseous fuel channels 56. Each gaseous fuel channel 56 is fluidly connected to one of the plurality of inlet channels 28. To dose gaseous fuel into individual inlet channels 28, in each gaseous fuel channel 56, a gaseous fuel admission valve 58 is installed. In some embodiments, internal combustion engine 100 may comprise more than one gaseous fuel manifold 54.

Each gaseous fuel admission valve 58 is configured to allow or to block flow of gaseous fuel into an individual inlet channel 28 to mix with compressed charge air from charge air system 4 in GFM. For example, cylinder specific mixing zones downstream of each gaseous fuel admission valve 58 are provided. For example, gaseous fuel admission valves 58 may be solenoid actuated plate valves in which springs hold a lower surface of a movable disk against an upper surface of a stationary disk or plate, the two surfaces being configured to provide a sealed relationship in a closed state of gaseous fuel admission valve 58. Each gaseous fuel admission valve 58 may be mounted to a cylinder head covering at least one cylinder 9.

The ability for cylinder-specific timing of the opening phase of gaseous fuel admission valve 58 allows to set cylinder-specifically the fuel amount provided to the charge air and guided into the combustion chamber therewith.

The amount of fuel determines the cylinder-specific power output and determines the lambda value, i.e. the air-fuel ratio. During operation, the amount of provided fuel may depend on the pressure situation upstream and downstream of gaseous fuel admission valve 58 and/or a check valve (for supplying a pre-chamber with gaseous fuel for spark ignited gaseous fuel) as well as the opening times of the same.

Purge gas system 7 (indicated in Fig. 1 by a dashed dotted box) comprises a purge gas tank 60, a purge gas control valve 62, and a purge gas shut-off valve 64 connected in series. Purge gas tank 60 constitutes a purge gas source to flush gaseous fuel piping 42, gaseous fuel manifold 54, etc. with a purge gas, such as nitrogen in a pressurized state.

Purge gas system 7 may be fluidly connected to gaseous fuel system 6 at various locations. For example, in Fig. 1 a first connection 66 is disposed proximal to the gaseous fuel manifold 54. A second connection 70 is disposed proximal to gaseous fuel source 36. First shut-off valve 68 and second shut-off valve 72 can block or allow a purge gas flow through first connection 66 and second connection 70, respectively. Additional connections may be integrated in gas valve unit of gaseous fuel source 36.

As previously mentioned, Fig. 1 illustrates a DF internal combustion engine as well as a gaseous fuel engine. In a DF internal combustion engine, liquid fuel system 8 comprises a liquid fuel tank 40 connected to liquid fuel piping 44. Liquid fuel tank 40 may comprise a first liquid fuel tank for storing a first liquid fuel, for example, heavy fuel oil (HFO), and a second liquid fuel tank for storing a second liquid fuel, for example Diesel fuel. Liquid fuel tank 40 constitutes a liquid fuel source for supplying liquid fuel for combustion in LFM. Additionally, liquid fuel tank 40 may constitute a liquid fuel source for supplying ignition fuel in GFM. In the latter case, the fuel amount contributing the air-fuel ration may further need to include the fuel equivalent of the ignition fuel. In some embodiments, the liquid fuel may contribute up to, for example, 10 % of the fuel amount being combusted.

Liquid fuel piping 44 is fluidly connected to a liquid fuel manifold 46 which splits into a plurality of liquid fuel inlet channels 48. To dose liquid fuel into the combustion chamber of cylinder 9, in each liquid fuel inlet channel 48 a fuel injection system 50 is installed.

In a gaseous fuel internal combustion engine, such as a spark ignited gaseous fuel internal combustion system, fuel injection system 50 may be fluidly connected to gaseous fuel source 36 (indicated by a dashed line 49). In this embodiment fuel injection system 50 may comprise a pre-combustion chamber for providing spark ignited pilot flames 91 (see Fig. 3) to ignite the mixture of gaseous fuel and air. In some embodiments of spark ignition, the pre-chamber ignition may contribute, for example, in the range from 2 % to 8 % such as 5 % of the fuel amount being combusted.

Exemplary embodiments of fuel injection system 50 for DF and gaseous fuel internal combustion engines are described in more detail when referring to Figs. 2 and 3, respectively.

As further shown in Fig. 1, internal combustion engine 100 comprises a plurality of pressure sensors 77, (at least) one for each cylinder 9. Each pressure sensor 77 is configured to generate a signal corresponding to a temporal development of an internal cylinder pressure during operation of the engine, for example, during the scavenging phase and/or combustion. The pressure sensor is further described when referring to Fig. 2.

To control operation of engine 100, a control unit 76 is provided. Control unit 76 forms part of a control system of the engine. Control unit 76 is configured to receive data of pressure sensor 77 via a readout connection line 102. Control unit 76 may further be configured to control various components of engine 100 such as gaseous fuel admission valves 58 via a control connection line 104 and fuel injection system 50 via a control connection line 106. Control unit 76 may further be configured to control inlet valves 16, outlet valves 18, and valves of purge gas system 7. In some embodiments, a second control unit may be provided to control the engine operation as mentioned above. Further description of the control system and additional control lines between control unit 76 and other components of the engine, such as the fuel injection system 50, will be given in connection with Figs. 2 and 3. In general, the control system may comprise electronic control elements of the control unit 76 as well as mechanical control elements.

Control unit 76 may further be connected to other sensors not shown in Fig. 1, such as engine load sensors, engine speed sensors, temperature sensors, NOx sensors provided for a common exhaust of the plurality of cylinders. Control unit 76 may also be connected to an operator panel (not shown) for issuing a warning to the operator, indicating a failure of the engine or the like.

Fig. 2 shows a cylinder 9 of a DF internal combustion engine 200 which is an exemplary embodiment of internal combustion engine 100 of Fig. 1. Elements already described in connection with Fig. 1 have the same reference numerals, such as engine block 2, control unit 76, pressure sensor 77, and cylinder 9.

Cylinder 9 provides at least one combustion chamber 10 for combusting a mixture of gaseous fuel and air, a piston 84, and a crankshaft 80 which is drivingly connected to piston 84 via a piston rod 82. Piston 84 is configured to reciprocate within cylinder 9.

Cylinder 9 is connected to charge air manifold 26 via inlet channel 28 and to exhaust gas manifold 34 via outlet channel 35 (see Fig. 1). Inlet valve 16 is disposed in inlet channel 28, and outlet valve 18 is disposed in outlet channel 35. Gaseous fuel admission valve 58 can supply gaseous fuel to combustion chamber 10 of cylinder 9.

Fig. 2 further illustrates fuel injection system 50 by a dashed box. When DF internal combustion engine 200 is operated in LFM, fuel injection system 50 is used to inject liquid fuel into combustion chamber 10, the liquid fuel being the sole source of energy. When DF internal combustion engine 200 is operated in GFM, fuel injection system 50 may be used to inject an ignition amount of liquid fuel into combustion chamber 10 to ignite the mixture of gaseous fuel and air. In GFM, fuel injection system 50 may therefore function as a gaseous fuel ignition system.

In Fig. 2, an exemplary embodiment of such a gaseous fuel ignition system is based on a main liquid fuel injector 38 for injecting a large amount of liquid fuel in LFM and a pilot amount of liquid fuel into combustion chamber 10 to ignite the mixture of gaseous fuel and air in GFM. In other embodiments, such as for heavy duty DF internal combustion engines, gaseous fuel ignition system may comprise a separate ignition liquid fuel injector 39 to inject the pilot amount of liquid fuel into combustion chamber 10 in GFM.

Cylinder 9 further comprises pressure sensor 77 to measure a temporal development of an internal cylinder pressure during the operation of the engine. Pressure sensor 77 may be a capacitive pressure sensor, an electromagnetic pressure sensor, a piezoelectric pressure sensor, an optical pressure sensor or any other pressure sensor known in the art. Pressure sensor 77 may be mounted at any location of cylinder 9 convenient for measuring the cylinder pressure during operation of the engine. For example, pressure sensor 77 may be mounted within a cylinder side wall or at the cylinder head face. Pressure sensor 77 may reach at least partly into the combustion chamber of cylinder 9, for example through a bore in a cylinder side wall.

Pressure sensor 77 may further be disposed outside of the combustion chamber 10 to detect the cylinder pressure indirectly. For example, pressure sensor 77 may be mounted at an existing component of the engine, such as a bolt head, spark plug boss, etc. Pressure sensor 77 may sense stress of that component during combustion, the stress corresponding to the internal cylinder pressure during combustion.

DF internal combustion engine 200 additionally comprises a control system including control unit 76. Control unit 76 is connected to main liquid fuel injector 38 via control connection line 108 and, in case of heavy duty DF internal combustion engines, also to ignition liquid fuel injector 39 via a separate control connection line (not shown).

Fig. 3 shows a cylinder 9 of a gaseous fuel internal combustion engine 300 being another exemplary embodiment of internal combustion engine 100 of Fig. 1. Elements already described in connection with Figs. 1 and 2 have the same reference numerals. Gaseous fuel internal combustion engine 300 is similar to DF internal combustion engine 200 of Fig. 2, except for the components described in the following.

Fuel injection system 50 comprises a pre-combustion chamber 90. Pre-combustion chamber is configured to receive a pre-mixture of gaseous fuel and air outside of (main) combustion chamber 10. The pre-mixture of gaseous fuel and air is ignited, for example by a spark plug, to provide pilot flames 91 disposed into combustion chamber 10. Pilot flames 91 are used to ignite the mixture of gaseous fuel and air in (main) combustion chamber 10. Control unit 76 is connected to pre-combustion chamber 90 via control connection line 110. Alternatively, fuel injection system 50 may be a spark plug for igniting the mixture of gaseous fuel and air via an electric discharge.

In general, there are multiple approaches for adapting valve timing individually for each of the cylinder of the plurality of cylinders such as by eccentric cam mounts (see EP 2 136 054), different cams, different kinematic, or full variable valve trains. In some engine configurations, distance plates beneath the bearing chair of the bearing swing arm may be provided. In addition to or as an alternative to valve timing adaptation, the valve lift may be cylinder-specifically adapted. Modifications of the valve lift may be based on, for example, different shapes of cams controlling the lift of respective operating lifter(s). In general, by adapting the temporal parameters as well as the opening characteristics, air filling can be matched over the plurality of cylinders.

The following illustrates the possibility in connection with a cam-shaft controlled system. For some large internal combustion engines, controlling inlet and outlet valves as well as the fuel system via one cam-shaft controlled system is also referred to as flexible camshaft technology. The following illustrates a modification of the same for cylinder specific control. However, also other technical valve control approaches may be applicable to implement the herein described control method.

As exemplarily shown in Fig. 4, the operation of inlet valves 16 (as well as outlet valves 18) may be controlled via valve control unit. Valve control unit comprises a camshaft 410 (shown only in part). Camshaft 410 is provided with at least one cam 412 which may be formed integrally with camshaft 410. Camshaft 410 is rotatably supported and rotatable about a camshaft axis A. Additionally, camshaft 410 may comprise further cams (not shown) such that camshaft 410 is provided with a plurality of cams for inlet valves and outlet valves, respectively, for example.

Cam 412 is adapted to operate a valve via a cam follower assembly 414 and an operating lifter 416. Cam follower assembly 414 for controlling the operation of the internal combustion engine comprises a cam follower 418, a cam follower support 420, and an actuator 422. Cam follower 418 is configured to follow cam 412 by tracing the stroke of cam 412 via, for example, a roll 424 supported thereon and transmitting the same to the valve via the operating lifter 416 supported on cam follower 418 to control the valve opening.

Valve control unit as described up to know is generally configured to control opening timing and/or valve lift. Opening timing and/or valve lift can, in general, be modified by adapting cam 412 and the position of cam follower 418 relative to cam 412 even without the presence of actuator 422 by specific adaptation.

In the following, a specific automatable approach for real time modifying is explained that is based on actuator 422.

To enable pivoting of cam follower assembly 414, cam follower support 420 is pivotably supported via, for example, a support shaft 423 such that cam follower support 420 is pivotable about a pivot axis B which is spaced apart from camshaft axis A, for example, parallel arranged spaced apart from camshaft axis A.

Cam follower support 420 supports cam follower 418 via, for example, at least one guiding pin, two of which are shown in the embodiment shown in Fig. 4 and are referenced with reference numerals 426 and 428, respectively. On said guiding pins 426 and 428, cam follower 418 can be guided during displacement caused by actuator 422. Guiding pins 426 and 428 may be rigidly fixed to cam follower support 420 or to cam follower 418, and may be slideable within guiding pin recesses (not shown) within cam follower 418 or cam follower support 420, respectively.

For facilitating a displacement of cam follower 418 towards or away from cam follower support 420, actuator 422 is provided which is interposed between cam follower 418 and cam follower support 420 and configured to displace cam follower 418 in a direction perpendicular to camshaft axis A to change an actuation timing of a component operated by an operating lifter supported by cam follower 418 tracing cam 412 of camshaft 410 during rotation of camshaft 410. Perpendicular as used herein may refer to substantially perpendicular including those degree values around 90° which still facilitate the above mentioned varying of actuation time by displacement of cam follower 418. Actuator 422 may be embodied as hydraulic actuator, pneumatic actuator, or electrical actuator. Actuator 422 may be controlled via control lines 430 and 432, such as pneumatic or electrical control lines. Further details are disclosed, for example, in European patent application EP 13 167 689 mentioned above.

In contrast to the above - principally in real time - adjustable flexible cam technology, in some embodiments the distance is set fixed when tuning the engine. This may in particular be of interest for gaseous fuel engines, which are designed for a pre-set speed for optimal fuel efficiency in power generation. The required displacement may be set, for example, via the number and/or the thickness of adjustment plates between cam follower 418 and cam follower support 420.

In any approach, control unit 76 may be adapting and/or provide information of the required distance based on an analysis and control method as exemplarily described below in connection with Figs. 5 and 6.

In general, control unit 76 of an engine as disclosed in connection with Figs. 1 to 3 may be a single microprocessor or multi microprocessors that include means for controlling, among others, an operation of various components of the internal combustion engine. Control unit 76 may be a general engine control unit (ECU) capable of controlling numerous functions associated with the internal combustion engine and/or its associated components. Control unit 76 may include all components required to run an application such as, for example, a memory, a secondary storage device, and a processor such as a central processing unit or any other means known in the art for controlling the internal combustion engine and its components. Various other known circuits may be associated with control unit 76, including power supply circuitry, signal conditioning circuitry, communication circuitry and other appropriate circuitry. Control unit 76 may analyze and compare received and stored data and, based on instructions and data stored in memory or input by a user, determine whether action is required. For example, control unit 76 may compare received pressure data from pressure sensor 77 with target values stored in memory, and, based on the results of the comparison, transmit signals to one or more components of the engine to alter the operation of the same.

When the internal combustion engine is operated, the pressure situation may vary from cylinder to cylinder with respect to charge air, exhaust, gaseous fuel. Then, also the air provided to the combustion chamber as well as the fuel amount may vary and similarly, the power of the cylinders as well as the respective exhaust. When configuring valve timing and/or during operation of the gaseous fuel combustion engine, it may therefore be desirable to balance the air-fuel ratio of the cylinders. Such balancing may allow achieving a match of the air-fuel ratio over the cylinders while having also a matched power output over the cylinders.

### Industrial Applicability

Exemplary internal combustion engines suited to the disclosed method are, for example, DF internal combustion engines of the series M46DF and M34DF, (pre-chamber, pre-chamber enriched, and direct spark ignited) gaseous fuel internal combustion engines such as the series GCM34, as well as Diesel internal combustion engines manufactured by Caterpillar Motoren GmbH & Co. KG, Kiel, Germany. One skilled in the art would appreciate, however, that the disclosed method can be adapted to suit other internal combustion engines as well.

In the following, an example of operation and control of internal combustion engines - as exemplarily described with reference to Figs. 1 to 4 - is explained in connection with Figs. 5 and 6. For illustration purposes, the methods are disclosed with reference to structural elements disclosed in connection with Figs. 1 to 4. However, the skilled person will understand that the respective steps can be performed on other embodiments as well.

Referring to Fig. 5, the pressure during a scavenger phase of a four stroke engine is shown for Miller operation. During the pressure drop from top dead center I (not shown), outlet valve 18 is opened at an opening time (OVO) prior piston 84 reaching bottom dead center I (BDCI). From the opening time of inlet valve 16 (IVO) between bottom dead center I (BDCI) and top dead center II (TDCII), the internal combustion chamber is flushed with charge air until the closing time of outlet valve 18 (OVC) between top dead center II (TDCII) and bottom dead center II (BDCII). Then, at the closing time of inlet valve 16 (IVC) around bottom dead center II (BDCII), the internal combustion chamber pressure starts rising again, for example once bottom dead center II (BDCII) has been past. Charge air filling pressures may be, for example, up to pressure values in the range around 5 bar to 6 bar for a single-stage turbocharged air system or up to pressure values in the range around 6 bar to 10 bar for a two-stage turbocharged air system. Thus, when inlet valve 16 closes at inlet valve closing time (IVC) the pressure within combustion chamber is essentially known. Inlet valve closing time (IVC) may be, for example, in a range of several degrees around bottom dead center II (BDCII), for example in a range from -50 ° before BDCII to 20 ° after BDCII. During the compression stroke, the charge air is further compressed and combustion is started by ignition as, for example, described above in connection with Figs. 2 and 3.

For the (the combustion characterizing) air-fuel ratio, the air amount in the cylinder is defined at inlet valve closing time (IVC) and can be determined using the chamber volume at that respective time. The analysis results in a cylinder-specific air filling value corresponding to that air amount.

It is noted that, while Fig. 5 illustrates the scavenger phase of the pressure as a basis to determine the air amount, the complete combustion pressure development over the four strokes, and in particular during combustion, further may allow determining the cylinder specific power output associated with the respective combustion, e.g. by deriving an energy value based on, for example, the indicated mean effective pressure (IMEP). The IMEP can, for example, be determined from the pressure measurement of pressure sensor 77.

In particular for medium speed large internal combustion engines, the pressure data may form a reliable source for the above described analysis.

The flow chart of Fig. 6 illustrates a procedure how, for a large internal combustion engine, air-fuel rations can be balanced for a plurality of cylinders. It is assumed that the internal combustion engine is operated (step 600) with a) a common ignition timing (meaning that during the combustion cycle of each individual cylinder the combustion is ignited at the same phase angle) and b) with a fuel system set such that for each of the cylinders the fuel amount is set at an initial value. At those values, the corresponding power outputs over the plurality of cylinders may vary in a range from, for example, 5 % up to 10 % or even 15 % or more, for example, for 20 cylinder V-gaseous fuel engine. In general, matching those power outputs, may result in power outputs of the plurality of cylinders that vary in a range reduced compared to the unmatched situation, e.g. in a range below 5% such as 2 % to 3 % or less. However, before such a power matching is performed, a matching of the air fillings is performed as described in the following.

For each of the plurality of cylinders, a cylinder-specific air filling value is determined (step 610). Based on an analysis of the cylinder-specific air filling values, for at least one cylinder of the plurality of cylinders, the temporal opening and/or valve lift of the respective air inlet valve is modified (step 620). Thereby, the air filling value of that cylinder is adapted while essentially maintaining the power output and, thus, the fuel amount provided to that cylinder of the plurality of cylinders. Specifically, the temporal openings for all or a selected number of cylinders are varied such that the air filling values - and thus the air amounts - are matched over the plurality of cylinders.

For example, increasing the air filling value may require moving inlet valve opening time (IVO) closer to top dead center II (TDCII). In addition at the same time, or alternatively, one may increase the opening time duration, i.e. delay inlet valve closing time (IVC). In addition or alternatively, the closing time of outlet valve 18 may be moved closer to top dead center II (TDCII). By respective valve timing modifications, the air filling value may thus be decreased or increased until the required matching has been achieved.

For example, for large internal combustion engines operated at gaseous fuel, around 3000 kg/h of air may be provided to each cylinder. However, there may be a variation in the range from several hundred kg/h, such as 300 kg/h between cylinders. Despite essentially identical geometry of the engine such as identical cams 412, variations of the pressure within and along the charge air manifold and the exhaust gas manifold result in those variations in the air filling. The above procedure may allow reducing the differences to below 100 kg/h such as 50 kg/h. In other words initial variations may be in the range of about 10 % or more, while balancing of the air filling may result in variations of 5 % or less such as 2 % or less.

At the same time, the turbocharger system may adapt its compression such that the common pressure in the charge air manifold is essentially maintained at a pre-set value.

Then, a matching of the power outputs of the plurality of cylinders may be performed, e.g., based on pressure data received for complete combustion cycles and respective energy values determined cylinder specifically (step 630).

Thereby, an air-fuel ratio that is balanced over the plurality of cylinders may be reached.

While in connection with Fig. 6, a sequence is illustrated at which air filling values are matched before cylinder-specific outlet powers were matched, the sequence may alternatively start with matching fuel amounts and then matching air filling values to result in an air-fuel ratio that is balanced over the plurality of cylinders. Moreover, in some embodiments, one or both matching procedures may be repeated or alternated with respect to each other as exemplarily illustrated in Fig. 6 by loop 640 for a repeated matching of the power outputs.

In some embodiments, modifying (step 620) the temporal opening IVO, IVC and/or valve lift of the respective at least one air inlet valve 16) may comprise matching the air filling values of the plurality of cylinders by deriving a common air filling value based on the cylinder-specific air filling values associated with the plurality of cylinders 9, and setting the air filling values in a pre-set air filling range around the common air filling value, for example, wherein the pre-set range around the common air filling value is in the range from 97.5 % to 102.5 % of the common air filling value; and/or matching the air filling values within a range from 3 % to 2 % or less with respect to each other; and/or determining a cylinder of the plurality of cylinders having a lowest air filling value, and delaying the opening of the inlet valves associated with the cylinder having the lowest air filling value; and/or determining a cylinder of the plurality of cylinders having a highest air filling value, and advancing the opening of the inlet valves associated with the cylinder having the highest air filling value; and/or wherein, once set, the cylinder-specific air filling values differ from each other by less than a predetermined air filling amount.

Some embodiments may further comprise modifying the temporal opening of at least one (exhaust) outlet valve 18 of the internal combustion engine 100 when matching the air filling values of the plurality of cylinders 9.

Modifying (step 620) the temporal opening of the at least one air inlet valve 16 and/or of the at least one exhaust outlet valve 18 may comprises varying the beginning time (IVO, OVO), the end time (IVC, OVC), and/or the duration of the opening time of the inlet valve 16 and/or of the outlet valve 18.

In some embodiments, determining (step 610) a cylinder-specific air filling value may comprise receiving a pressure data corresponding to a cylinder pressure and a respective combustion chamber volume data of the respective cylinder; and/or receiving a pressure data corresponding to a temporal development of a cylinder pressure during charging of the respective cylinder and/or combustion chamber volume data of the respective cylinder; and/or determining the cylinder-specific air filling value based on the cylinder pressure and/or the respective combustion chamber volume data at the closing of the respective at least one air inlet valve 16.

Some embodiments may further comprise providing a valve control unit for each of the at least one air inlet valves 16 configured to modify the air filling amount within a range of ±10% by valve timing and/or valve lift; and/or providing a valve control unit for each of the at least one outlet valves 18 configured to modify the air filling amount within a range of ±10% by valve timing and/or valve lift; and/or operating (step 600) the internal combustion engine 100 with a common ignition timing for each cylinder of the plurality of cylinders 9.

Some embodiments may further comprise setting the opening timing of at least one of the air inlet valves and/or exhaust gas outlet valves of the internal combustion engine fixed for all operation modes and/or in a load dependent manner; and/or adapting the opening timing of at least one of the air inlet valves and/or exhaust gas outlet valves of the internal combustion engine continuously during operation of the internal combustion engine.

Referring again to Fig. 6, the method can further be used to balance air-fuel ratios of a plurality of cylinders 9 of an internal combustion engine 100 having at least one air inlet valve 16 respectively associated with each cylinder of the plurality of cylinders 9. Such a method may further comprise performing the above described method for balancing air filling values of the plurality of cylinders and add and/or advance the step of setting (step 630) fuel amounts cylinder-specifically to provide cylinder-specific power outputs to be matched over the plurality of cylinders (step 630).

In some embodiments, setting (step 630) fuel amounts cylinder-specifically may comprise adapting the respective fuel amounts such that the cylinder-specific power outputs are within a pre-set power range, e.g. around a common power output, for example, wherein the pre-set power range is in the range from 97.5 % to 102.5 % of the common power output; and/or setting the fuel amounts cylinder-specifically to be within a range from 5 % or even within a range from 3 % to 2 % or less with respect to each other. Furthermore, once set, the cylinder-specific power outputs may differ from each other by less than a predetermined power amount.

In some embodiments, setting (step 630) fuel amounts cylinder-specifically may comprise receiving a pressure data corresponding to a temporal development of a cylinder pressure during combustion within the respective cylinder; and the cylinder-specific fuel amount may be determined based on the cylinder pressure data.

In addition, to the before disclosed methods to balance air fillings and/or fuel-air ratios, some methods may further comprise monitoring (step 650) an the engine operation characterizing parameter such as an NOx emission level of the engine exhaust or an engine knock level of the internal combustion engine 100; and controlling (step 660) at least one operating parameter of the internal combustion engine 100 to maintain the the engine operation characterizing parameter at a value beyond a predetermined parameter threshold and/or to maintain a constant value of the the engine operation characterizing parameter.

In some embodiments, controlling (step 660) the at least one operating parameter of the internal combustion engine may comprise modifying an intake manifold air pressure provided by a common pressurized air source (charge air system 4) of the internal combustion engine 100; and/or adapting the common ignition timing such as modifying the common ignition timing from a first a common ignition timing to a second common ignition timing for each of the plurality of cylinders.

As discussed herein, every cylinder of internal combustion engines (especially Otto-engines) generates different power output. In general, cylinder balancing has the target to adapt cylinder power output, e.g. by adjusting fuel mass (herein also referred to as fuel amount). Despite matched power outputs, every cylinder may still have different air mass (herein also referred to as air filling and further associated to an air filling value) and thus result in different air-fuel ratios in each cylinder, which may cause, for example, different NOx emissions among the cylinders. Those different emissions may limit the potential efficiency increase, which would have been aspired by cylinder balancing. As proposed herein, cylinder-specific valve timing combined with cylinder-specific fuel mass adaptation may result in power output that can closer to the optimal power output, meaning, for example, that cylinder specific differences in emission may be captured and improve the range of cylinder balancing. In addition, the stresses of the cylinders may be decreased by capturing cylinders with high pressure levels so that the maintenance range may be increased.

As further discussed above, there are various approaches to realize cylinder-specific valve timing. The valve timing may be adjusted during operation of the engine or, e.g. by inserting distance plates beneath the bearing chair of the bearing swing arm when the engine is stopped.

In some embodiments, the valve timing may be started from simulation results and adapted until proper matching of the air fillings is reached.

In general, the combination of fuel mass matching and air filling matching may increase the engine efficiency of about, for example, 0.5 to 1.5 percentage points.

Internal combustion engine may be of any size, with any number of cylinders and in any configuration ("V", "in-line", etc.). Internal combustion engine may be used to power any machine or other device, including ships or other marine applications, locomotive applications, on-highway trucks or vehicles, off-highway machines, earth-moving equipment, generators, aerospace applications, pumps, stationary equipment such as power plants, or other engine-powered applications. The herein disclosed concepts are in particular applicable to large internal combustion engines operating, for example, at medium to low speed such that pressure data with high quality can be used.

It is noted that in particular large gaseous fuel manifolds, such as required for the 20 cylinder-"V" gaseous fuel internal combustion engines GCM34 or for large DF internal combustion engines such as the M46DF of Caterpillar Motoren GmbH & Co. KG, are prone to pressure fluctuations and, thus, to air filling differences in the unmatched case. Accordingly, in particular those large internal engines operated at least partly on gaseous fuel may benefit from the herein disclosed cylinder balancing of air-fuel ratios of a plurality of cylinders.

Although the preferred embodiments of this invention have been described herein, improvements and modifications may be incorporated without departing from the scope of the following claims.

## Claims

1. A method for balancing air filling values of a plurality of cylinders (9) of an internal combustion engine (100) having at least one air inlet valve (16) respectively associated with each cylinder of the plurality of cylinders (9), the method comprising:
for each cylinder of the plurality of cylinders (9), determining (step 610) a cylinder-specific air filling value associated with the respective cylinder of the plurality of cylinders (9);
for at least one cylinder of the plurality of cylinders (9), modifying (step 620) the temporal opening (IVO, IVC) and/or valve lift of the respective at least one air inlet valve (16) to adapt the air filling values of the plurality of cylinders (9) to be matched over the plurality of cylinders (9).

2. The method of claim 1, wherein modifying (step 620) the temporal opening (IVO, IVC) and/or valve lift of the respective at least one air inlet valve (16) comprises matching the air filling values of the plurality of cylinders by
deriving a common air filling value based on the cylinder-specific air filling values associated with the plurality of cylinders (9), and setting the air filling values in a pre-set air filling range around the common air filling value, for example, wherein the pre-set range around the common air filling value is in the range from 97.5 % to 102.5 % of the common air filling value; and/or
matching the air filling values within a range from 3 % to 2 % or less with respect to each other; and/or
determining a cylinder of the plurality of cylinders having a lowest air filling value, and delaying the opening of the inlet valves associated with the cylinder having the lowest air filling value; and/or
determining a cylinder of the plurality of cylinders having a highest air filling value, and advancing the opening of the inlet valves associated with the cylinder having the highest air filling value; and/or
wherein, once set, the cylinder-specific air filling values differ from each other by less than a predetermined air filling amount.

3. The method of any one of the preceding claims, further comprising:
modifying the temporal opening of at least one exhaust outlet valve (18) of the internal combustion engine (100) when matching the air filling values of the plurality of cylinders (9).

4. The method of any one of the preceding claims, wherein modifying (step 620) the temporal opening of the at least one air inlet valve (16) and/or of the at least one exhaust outlet valve (18) comprises:
varying the beginning time (IVO, OVO), the end time (IVC, OVC), and/or the duration of the opening time of the inlet valve (16) and/or of the outlet valve (18).

5. The method of any one of the preceding claims, wherein determining (step 610) a cylinder-specific air filling value comprises:
receiving a pressure data corresponding to a cylinder pressure and a respective combustion chamber volume data of the respective cylinder; and/or
receiving a pressure data corresponding to a temporal development of a cylinder pressure during charging of the respective cylinder and/or a combustion chamber volume data of the respective cylinder; and/or
determining the cylinder-specific air filling value based on the cylinder pressure and/or the respective combustion chamber volume data at the closing of the respective at least one air inlet valve (16).

6. The method of any one of the preceding claims, further comprising:
providing a valve control unit for each of the at least one air inlet valves (16) configured to modify the air filling amount within a range of ±10% by valve timing and/or valve lift; and/or
providing a valve control unit for each of the at least one air outlet valves (18) configured to modify the air filling amount within a range of ±10% by valve timing and/or valve lift; and/or
operating (step 600) the internal combustion engine (100) with a common ignition timing for each cylinder of the plurality of cylinders (9).

7. The method of any one of the preceding claims, further comprising:
setting the opening timing of at least one of the air inlet valves and/or exhaust gas outlet valves of the internal combustion engine fixed for all operation modes and/or in a load dependent manner; and/or
adapting the opening timing of at least one of the air inlet valves and/or exhaust gas outlet valves of the internal combustion engine during operation of the internal combustion engine, for example repeatedly and/or continuously.

8. A method for balancing air-fuel ratios of a plurality of cylinders (9) of an internal combustion engine (100) having at least one air inlet valve (16) respectively associated with each cylinder of the plurality of cylinders (9), the method comprising:
performing the method for balancing air filling values of the plurality of cylinders (9) according to any one of the preceding claims; and
setting (step 630) fuel amounts cylinder-specifically to provide cylinder-specific power outputs to be matched over the plurality of cylinders (step 630).

9. The method of claim 8, wherein setting (step 630) fuel amounts cylinder-specifically comprises:
adapting the respective fuel amounts such that the cylinder-specific power outputs are within a pre-set power range, e.g. around a common power output, for example, wherein the pre-set power range is in the range from 97.5 % to 102.5 % of the common power output; and/or
setting the fuel amounts cylinder-specifically to be within a range from 5 % or even within a range from 3 % to 2 % or less with respect to each other; and/or
wherein, once set, the cylinder-specific power outputs differ from each other by less than a predetermined power amount.

10. The method of any one of the preceding claims, wherein setting (step 630) fuel amounts cylinder-specifically comprises:
receiving a pressure data corresponding to a temporal development of a cylinder pressure during combustion within the respective cylinder; and
wherein the cylinder-specific fuel amount is determined based on the cylinder pressure data.

11. The method of any one of the preceding claims, further comprising:
monitoring (step 650) an the engine operation characterizing parameter such as an NOx emission level of the engine exhaust or an engine knock level of the internal combustion engine (100); and
controlling (step 660) at least one operating parameter of the internal combustion engine (100) to maintain the the engine operation characterizing parameter at a value beyond a predetermined parameter threshold and/or to maintain a constant value of the the engine operation characterizing parameter.

12. The method of claim 11, wherein controlling (step 660) the at least one operating parameter of the internal combustion engine (100) comprises:
modifying an intake manifold air pressure provided by a common pressurized air source (4) of the internal combustion engine (100); and/or
adapting the common ignition timing such as modifying the common ignition timing from a first a common ignition timing to a second common ignition timing for each of the plurality of cylinders.

13. An internal combustion engine (100), comprising:
a plurality of cylinders (9);
for each cylinder of the plurality of cylinders (9), a fuel system (6), an ignition timing device for controlling the ignition time of a fuel-air mixture in the respective cylinder (9), a pressure sensor (77) for determining a cylinder-specific air filling value; and
a control unit (76) configured to perform the method according to any one of the preceding claims.

14. The internal combustion engine (100) of claim 13, further comprising:
a valve control unit for each of the at least one air inlet valves (16) configured to modify the air filling amount within a range of ±10% by valve timing and/or valve lift; and/or
a valve control unit for each of the at least one air outlet valves (18) configured to modify the air filling amount within a range of ±10% by valve timing and/or valve lift.

15. The internal combustion engine (100) of claim 13 or claim 14, wherein:
the fuel system (6) comprises a gaseous fuel admission valve (58) and/or a liquid fuel injector (38, 39);
the ignition timing device comprises a common rail based ignition fuel system and/or a spark ignited pre-chamber (90); and/or
the sensor (77) is configured to detect a pressure data corresponding to a temporal development of an internal cylinder pressure.
